# EUROPEAN PATENT APPLICATION

(11) **EP 4 570 737 A1**
(43) Date of publication of application: **18.06.2025**
(21) Application number: 24190602.3
(22) Date of filing: 24.07.2024
(51) Int. Cl.: B66F 9/075, B66F 9/22, B66F 11/04, B66F 13/00

(54) **ARM-TYPE AERIAL WORK PLATFORM**

(30) Priority: 14.12.2023 CN 202311714307
(71) Applicant: LINGONG HEAVY MACHINERY CO., LTD, Jinan City, Shandong 250104 (CN)
(72) Inventor: DENG, Xiaofei, Jinan City, 250104 (CN); ZHANG, Zhaoliang, Jinan City, 250104 (CN); WANG, Dehong, Jinan City, 250104 (CN); GUO, Bing, Jinan City, 250104 (CN); TANG, Fuxin, Jinan City, 250104 (CN); ZHENG, Xueyun, Jinan City, 250104 (CN)
(74) Representative: Rapisardi, Mariacristina

(57) **Abstract**

Provided is an arm-type aerial work platform. The platform includes a chassis mechanism (100) and a walking drive mechanism (200). The chassis mechanism (100) includes a front drive axle (101), a front drive axle (102) and a front drive wheels (103) on two sides of the front drive axle (101), and rear drive wheels (104) on two sides of the front drive axle (102). The walking drive mechanism (200) includes a front transmission shaft (201), a rear transmission shaft (202), a transfer case (203), and a first drive motor (204). The first drive motor (204) includes a first permanent magnet synchronization motor and a first alternating current driver, an input terminal of the first permanent magnet synchronization motor is electrically connected to the first alternating current driver, and an output terminal of the first permanent magnet synchronization motor is connected to an input terminal of the transfer case (203).

## Description

### TECHNICAL FIELD

The present invention relates to the technical field of engineering machinery, in particular, an arm-type aerial work platform.

### BACKGROUND

The aerial work platform currently on the market mainly includes a chassis drive mechanism, a turntable rotation mechanism, and a boom mechanism. The chassis drive mechanism usually adopts a wheel-drive or axle-drive control mode. The wheel-drive mode means to be driven by a three-phase alternating current asynchronous motor installed on the front and rear wheels. The axle-drive mode is realized by a three-phase alternating current asynchronous motor driving the front and rear axles. The movements of the turntable rotation mechanism and boom mechanism are controlled by a three-phase alternating current asynchronous motor combined with a plunger pump

In practical application, however, there are limitations of poor driving performance, insufficient passing performance, and poor speed regulation performance of the walking drive system. The pump drive control system also has a problem of low power density and high energy consumption, resulting in poor battery life and increased customer charging times. In addition, the control system is complex and has more noise.

### SUMMARY

The present invention provides an arm-type aerial work platform to improve the reliability of the arm-type aerial work platform.

According to an aspect of the present invention, an arm-type aerial work platform is provided. The platform includes a chassis mechanism and a walking drive mechanism.

The chassis mechanism includes a front drive axle, a rear drive axle, front drive wheels on two sides of the front drive axle, and rear drive wheels on two sides of the rear drive axle.

The walking drive mechanism includes a front transmission shaft, a rear transmission shaft, a transfer case, and a first drive motor.

The front drive axle is connected to a first output terminal of the transfer case through the front transmission shaft. The rear drive axle is connected to a second output terminal of the transfer case through the rear transmission shaft.

The first drive motor includes a first permanent magnet synchronization motor and a first alternating current driver. An input terminal of the first permanent magnet synchronization motor is electrically connected to the first alternating current driver. An output terminal of the first permanent magnet synchronization motor is connected to an input terminal of the transfer case.

The first alternating current driver is configured to acquire a walking control signal and according to the walking control signal, output a walking drive signal to the first permanent magnet synchronization motor.

Optionally, the walking drive mechanism also includes a high-voltage power line.

A power supply terminal of the first alternating current driver receives a high-voltage power signal through the high-voltage power line.

Optionally, the arm-type aerial work platform also includes a pump drive system and a plurality of pump drive load mechanisms.

A pump drive load mechanism at least includes a steering mechanism, a turntable mechanism, a boom telescopic mechanism, and a boom luffing mechanism.

The pump drive system includes a second drive motor, a plunger pump, and a superimposed proportional valve.

The second drive motor includes a second permanent magnet synchronization motor and a second alternating current driver. An input terminal of the second permanent magnet synchronization motor is electrically connected to the second alternating current driver.

A power terminal of the plunger pump is connected to a torque output terminal of the second permanent magnet synchronization motor. A high-pressure liquid discharge terminal of the plunger pump is connected to a high-pressure liquid inlet of the superimposed proportional valve.

A first liquid discharge port of the superimposed proportional valve is connected to the steering mechanism. A second liquid discharge port of the superimposed proportional valve is connected to the turntable mechanism. A third liquid discharge port of the superimposed proportional valve is connected to the boom telescopic mechanism. The third liquid discharge port of the superimposed proportional valve is connected to the boom luffing mechanism.

The second alternating current driver is configured to acquire a steering control signal, a turntable control signal, a boom telescopic control signal, and a boom luffing control signal, and according to a luffing action signal, output an alternating current drive signal to the second permanent magnet synchronization motor.

The second permanent magnet synchronization motor, according to the alternating current drive signal, drives the plunger pump to output high-pressure hydraulic oil to each pump drive load mechanism through the superimposed proportional valve.

Optionally, the steering mechanism includes a bidirectional left steering cylinder and a bidirectional right steering cylinder.

The bidirectional left steering cylinder and the bidirectional right steering cylinder are disposed on the front drive axle.

The bidirectional left steering cylinder and the bidirectional right steering cylinder are configured to control the direction of the front drive wheels according to high-pressure hydraulic oil from the superimposed proportional valve.

Optionally, the turntable mechanism includes a swing motor and reducer module and a turntable body.

The swing motor and reducer module is configured to control the steering of the turntable body according to high-pressure hydraulic oil from the superimposed proportional valve.

Optionally, the boom telescopic mechanism includes a four-section arm telescopic mechanism and a telescopic mechanism oil cylinder.

The telescopic mechanism oil cylinder controls the four-section arm telescopic mechanism to extend or retract according to the high-pressure hydraulic oil from the superimposed proportional valve.

Optionally, the boom luffing mechanism includes a luffing lifting cylinder.

The luffing lifting cylinder controls upward or downward amplitude of variation of the four-section arm telescopic mechanism according to the high-pressure hydraulic oil from the superimposed proportional valve.

Optionally, the arm-type aerial work platform also includes a down-control operating system and a vehicle controller.

The down-control operating system is communicatively connected to the vehicle controller.

The down-control operating system is configured to send an action signal to the vehicle controller. The action signal includes a walking action signal, a steering action signal, a turntable rotation action signal, a boom telescopic action signal, and a boom luffing action signal.

The vehicle controller is communicatively connected to the first alternating current driver and the second alternating current driver. The vehicle controller is configured to send a walking control signal to the first alternating current driver according to the walking action signal, send a steering control signal to the second alternating current driver according to the steering action signal, send a turntable control signal to the second alternating current driver according to the turntable rotation action signal, send a boom telescopic control signal to the second alternating current driver according to the boom telescopic action signal, and send a boom luffing control signal to the second alternating current driver according to the boom luffing action signal.

The vehicle controller is also communicatively connected to the superimposed proportional valve and is configured to control, according to the action signal provided by the down-control operating system, the opening of the first liquid discharge port, the second liquid discharge port, and the third liquid discharge port of the superimposed proportional valve.

Optionally, the down-control operating system and the vehicle controller are also electrically connected to the superimposed proportional valve.

The down-control operating system is also configured to acquire the opening information of the superimposed proportional valve and send opening adjustment information to the vehicle controller according to the opening information of the superimposed proportional valve.

The vehicle controller is also configured to, according to the opening adjustment information, adjust the opening of the first liquid discharge port, the second liquid discharge port, and the third liquid discharge port of the superimposed proportional valve.

Optionally, the arm-type aerial work platform also includes a low-voltage battery pack, a high-voltage battery pack, a high-voltage enabling relay, a main contactor, a high and low voltage CAN isolation, and a main power switch.

The coil of the high-voltage enabling relay is electrically connected between a positive terminal and a negative terminal of the low-voltage battery pack. The main power switch is disposed between the coil of the high-voltage enabling relay and the positive terminal of the low-voltage battery pack. A first contact point of the high-voltage enabling relay is electrically connected to a positive terminal of the high-voltage battery pack. A second contact point of the high-voltage enabling relay is electrically connected to an enabling terminal of the first alternating current driver and an enabling terminal of the second alternating current driver.

The coil of the main contactor is electrically connected to a power supply control terminal of the second alternating current driver. A first contact point of the main contactor is electrically connected to the positive terminal of the high-voltage battery pack. A second contact point of the main contactor is electrically connected to a power supply terminal of the first alternating current driver and a power supply terminal of the second alternating current driver.

The high and low voltage CAN isolation is communicatively connected to the vehicle controller, the low-voltage battery pack, the high-voltage battery pack, the first alternating current driver, and the second alternating current driver.

The arm-type aerial work platform provided by the embodiments of the present invention adopts a first drive motor integrated with a first permanent magnet synchronization motor and a first alternating current driver for an axle-driven arm-type aerial work vehicle to achieve the walking drive function. Compared with the method of using a three-phase alternating current asynchronous motor to drive a wheeled aerial work vehicle, the method in the present invention simplifies the control operation, improves the driving performance, passing performance, and speed regulation performance, and effectively enhances the reliability of the arm-type aerial work platform.

It is to be understood that the content described in this part is neither intended to identify key or important features of embodiments of the present invention nor intended to limit the scope of the present invention. Other features of the present invention are apparent from the description provided hereinafter.

### BRIEF DESCRIPTION OF DRAWINGS

FIG. 1 is a diagram illustrating the structure of an arm-type aerial work platform according to an embodiment of the present invention.
FIG. 2 is a diagram illustrating the structure of a chassis mechanism according to an embodiment of the present invention.
FIG. 3 is a diagram illustrating the structure of another chassis mechanism according to an embodiment of the present invention.
FIG. 4 is a diagram illustrating the structure of a walking drive mechanism according to an embodiment of the present invention.
FIG. 5 is a diagram illustrating the structure of another arm-type aerial work platform according to an embodiment of the present invention.
FIG. 6 is a diagram illustrating the structure of yet another arm-type aerial work platform according to an embodiment of the present invention.
FIG. 7 is a diagram illustrating the structure of a pump drive system according to an embodiment of the present invention.
FIG. 8 is a diagram illustrating the structure of a pump drive system according to an embodiment of the present invention.
FIG. 9 is a diagram illustrating the electrical connection of an arm-type aerial work platform according to an embodiment of the present invention.
FIG. 10 is another diagram illustrating the structure of an arm-type aerial work platform shown in FIG. 1 according to an embodiment of the present disclosure.
FIG. 11 is yet another diagram illustrating the structure of an arm-type aerial work platform shown in FIG. 1 according to an embodiment of the present disclosure.
FIG. 12 is another diagram illustrating the electrical connection of an arm-type aerial work platform according to an embodiment of the present disclosure.

### DETAILED DESCRIPTION

For a better understanding of the technical solutions by those skilled in the art, the solutions in embodiments of the present invention will be described clearly and completely in conjunction with the drawings in embodiments of the present invention. Apparently, the embodiments described below are part, not all, of the embodiments of the present invention. Based on the embodiments described herein, all other embodiments obtained by those of ordinary skill in the art on the premise that no creative work is done are within the scope of the present invention.

It is to be noted that the terms "first", "second", and the like in the description, claims, and drawings of the present invention are used to distinguish between similar objects and are not necessarily used to describe a particular order or sequence. It should be understood that the data used in this way is interchangeable where appropriate so that the embodiments of the present invention described herein may also be implemented in a sequence not illustrated or described herein. In addition, terms "including" and "having" or any variations thereof are intended to encompass a non-exclusive inclusion. For example, a process, method, system, product, or apparatus that includes a series of steps or units not only includes the expressly listed steps or units but may also include other steps or units that are not expressly listed or are inherent to such a process, method, product, or apparatus.

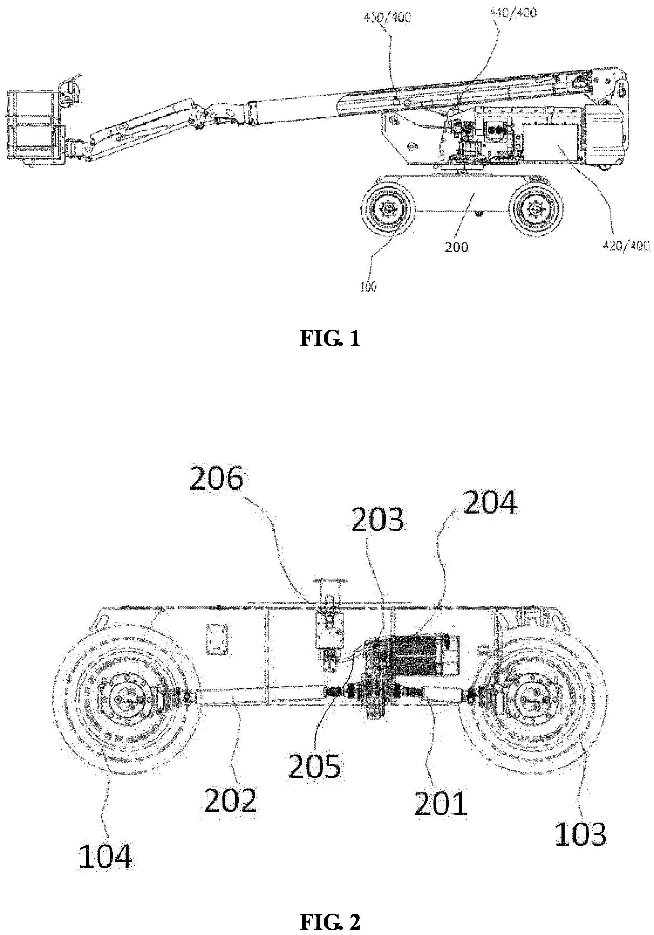

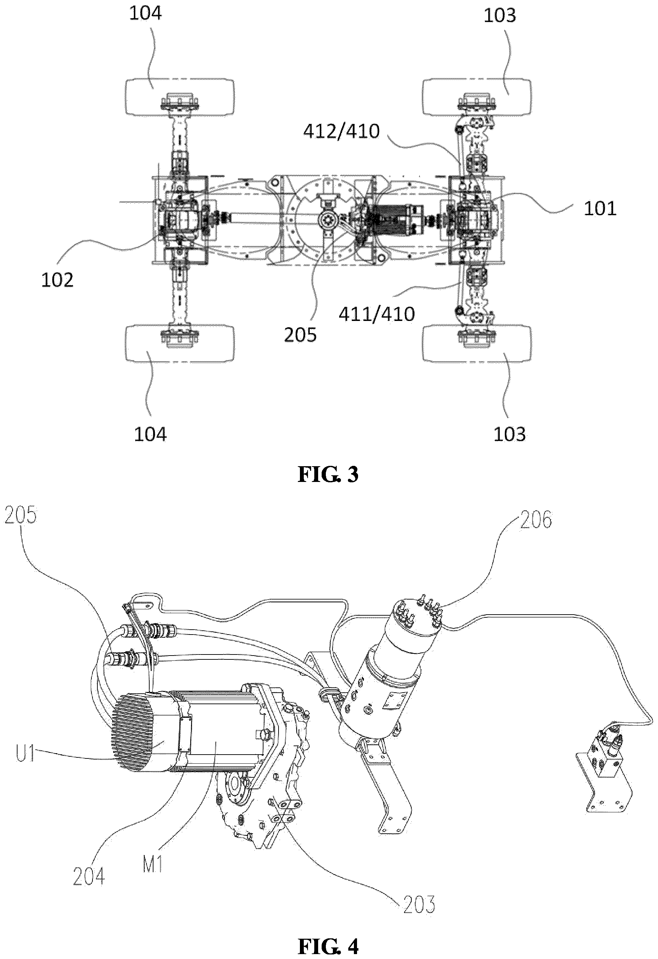

FIG. 1 is a diagram illustrating the structure of an arm-type aerial work platform according to an embodiment of the present invention. FIG. 2 is a diagram illustrating the structure of a chassis mechanism according to an embodiment of the present invention. FIG. 3 is a diagram illustrating the structure of another chassis mechanism according to an embodiment of the present invention. FIG. 4 is a diagram illustrating the structure of a walking drive mechanism according to an embodiment of the present invention. With reference to FIG. 1 to FIG. 4, the arm-type aerial work platform includes a chassis mechanism 100 and a walking drive mechanism 200. The chassis mechanism 100 includes a front drive axle 101, a rear drive axle 102, front drive wheels 103 on two sides of the front drive axle 101, and rear drive wheels 104 on two sides of the rear drive axle 102. The walking drive mechanism 200 includes a front transmission shaft 201, a rear transmission shaft 202, a transfer case 203, and a first drive motor 204. The front drive axle 101 is connected to a first output terminal of the transfer case 203 through the front transmission shaft 201; the rear drive axle 102 is connected to a second output terminal of the transfer case 203 through the rear transmission shaft 202; the first drive motor 204 includes a first permanent magnet synchronization motor M1 and a first alternating current driver U1, an input terminal of the first permanent magnet synchronization motor M1 is electrically connected to the first alternating current driver U1, and an output terminal of the first permanent magnet synchronization motor M1 is connected to an input terminal of the transfer case 203; the first alternating current driver U1 is configured to acquire a walking control signal and according to the walking control signal, output a walking drive signal to the first permanent magnet synchronization motor M1.

Specifically, after the first drive motor 204 receives a walking drive signal, the first permanent magnet synchronization motor M1 may output torque according to the walking drive signal. The torque is transmitted to the front transmission shaft 201 and the rear transmission shaft 202 through the transfer case 203 so that the front drive axle 101 of the chassis mechanism 100 can be driven by the front transmission shaft 201, and the rear drive axle 102 of the chassis mechanism 100 can be driven by the rear transmission shaft 202. In this manner, the front drive axle 101 can be used to drive the front drive wheels 103 on the two sides of the front drive axle 101 forward or backward, and the rear drive axle 102 can be used to drive the rear drive wheels 104 on the two sides of the rear drive axle 102 forward or backward, thereby achieving the walking drive of the arm-type aerial work platform. The first drive motor 204 includes a first permanent magnet synchronization motor M1 and a first alternating current driver U1. The first alternating current driver U1 and the first permanent magnet synchronization motor M1 are integrated and installed, that is, the first drive motor 204 is a two-in-one motor of the first alternating current driver U1 and the first permanent magnet synchronization motor M1, and the first alternating current driver U1 is connected to three-phase input terminals (including U phase, V phase, and W phase) of the first permanent magnet synchronization motor M1 through three copper bars, which can be disassembled and assembled to facilitate maintenance and care. The first alternating current driver U1 can acquire a walking control signal from a vehicle controller. The walking control signal may include a forward control signal for controlling the vehicle to advance and a backward control signal for controlling the vehicle to retreat. After receiving the walking control signal, the first alternating current driver U1 may output a walking drive signal to the first permanent magnet synchronization motor M1 according to the walking control signal. The walking drive signal may be a three-phase alternating current. In this manner, the first permanent magnet synchronization motor M1 may be driven to rotate by the walking drive signal, thereby being able to output torque.

Illustratively, a fault indicator light may be disposed on the first alternating current driver U1 to display the current state of the first alternating current driver U1. The fault indicator light may include two colors: yellow and red. The combination of lights of different colors can display different information. For example, when the first alternating current driver U1 fails, the yellow light and the red light flash alternately, and the fault information of the first alternating current driver U1 can be determined by acquiring the number of flashes of the two lights.

The first drive motor 204 may also be integrated with an AB-phase encoder and a temperature sensor. The temperature sensor is configured to detect the temperature of the first alternating current driver U1 and can feed back the detected temperature to the vehicle controller to achieve the overheat protection function of the first alternating current driver U1. For example, it is possible to alarm when the temperature of the first alternating current driver U1 reaches 75 °C, and the output is cut off when the temperature of the first alternating current driver U1 reaches 95 °C. The AB-phase encoder may detect the rotation direction and the rotation speed of the first permanent magnet synchronization motor M1 in real time and can send the detected rotation direction and rotation speed to the vehicle controller through CANOPEN so that the vehicle controller adjusts, according to the rotation direction and the rotation speed of the first permanent magnet synchronization motor M1 in real time, the walking control signal sent to the first alternating current driver U1.

The arm-type aerial work platform provided by the embodiment of the present invention adopts a first drive motor integrated with a first permanent magnet synchronization motor M1 and a first alternating current driver U1 on an axle-driven arm-type aerial work vehicle to achieve the walking drive function. Compared with the method of using a three-phase alternating current asynchronous motor to drive a wheeled aerial work vehicle, the method in the present invention simplifies the control operation, improves the driving performance, passing performance, and speed regulation performance, and effectively enhances the reliability of the arm-type aerial work platform.

Illustratively, with reference to FIGS. 2 and 3, the walking drive mechanism 200 also includes a high-voltage power line 205, and a power supply terminal of the first alternating current driver U1 receives a high-voltage power signal through the high-voltage power line 205. With reference to FIG. 2, the high-voltage power line 205 is connected to the first drive motor 204 through a conductive slip ring 206, and the high-voltage power line is used to transmit the high-voltage power signal, ensuring the security and reliability of high-voltage power transmission.

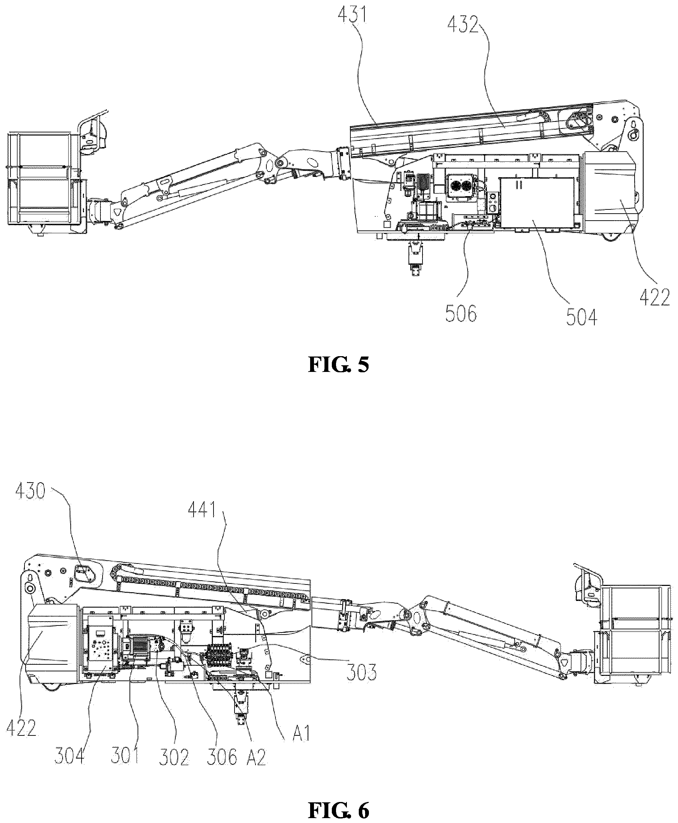

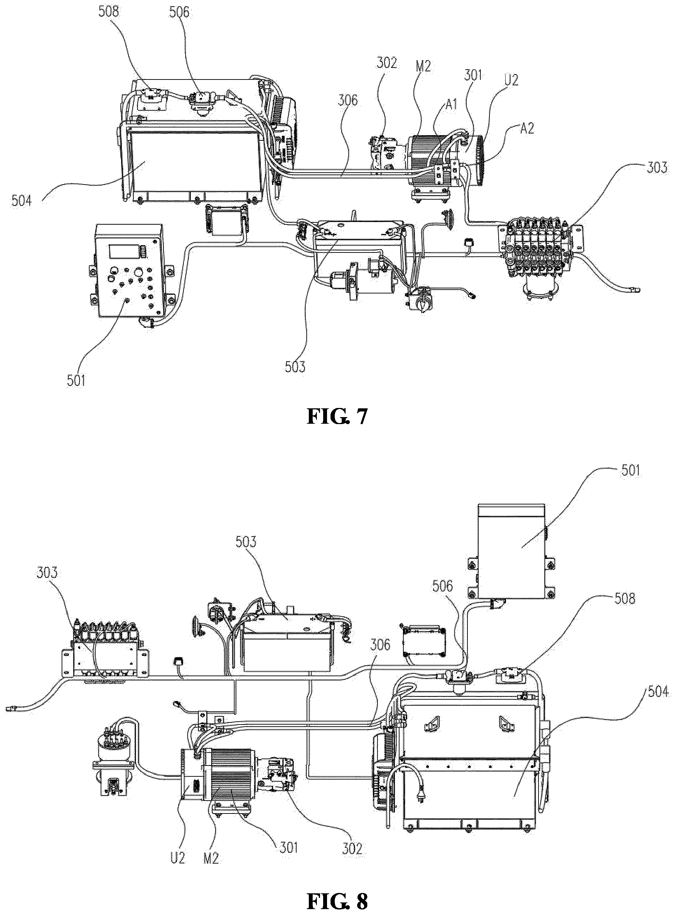

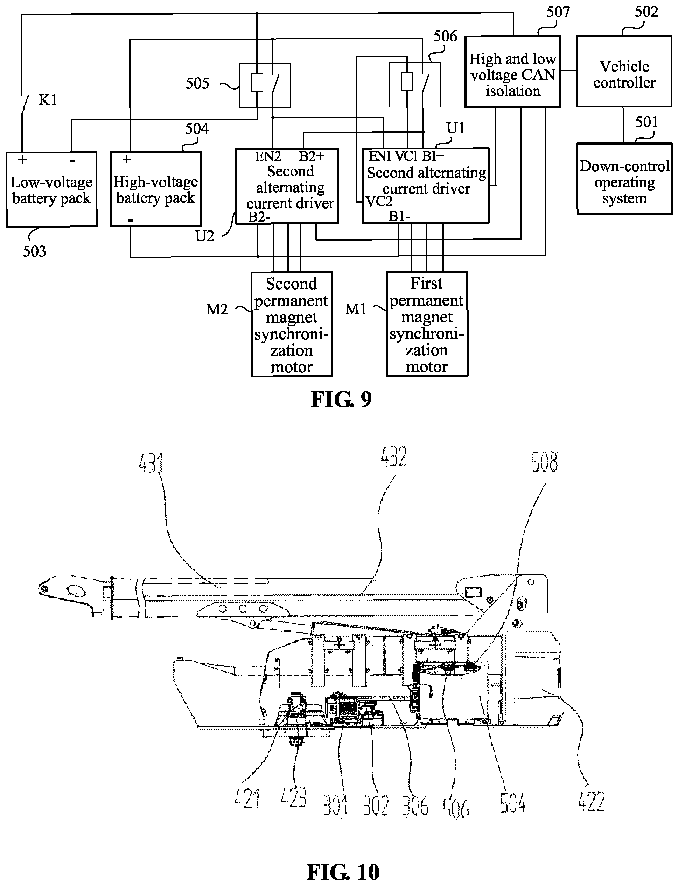

Optionally, FIG. 5 is a diagram illustrating the structure of another arm-type aerial work platform according to an embodiment of the present invention. FIG. 6 is a diagram illustrating the structure of yet another arm-type aerial work platform according to an embodiment of the present invention. FIG. 7 is a diagram illustrating the structure of a pump drive system according to an embodiment of the present invention. FIG. 8 is a diagram illustrating the structure of a pump drive system according to an embodiment of the present invention. FIG. 9 is a diagram illustrating the electrical connection of an arm-type aerial work platform according to an embodiment of the present invention. With reference to FIG. 1, FIG. 3, and FIG. 5 to FIG. 9, the arm-type aerial work platform also includes a pump drive system and multiple pump drive load mechanisms 400; each pump drive load mechanism 400 at least includes a steering mechanism 410, a turntable mechanism 420, a boom telescopic mechanism 430, and a boom luffing mechanism 440; the pump drive system includes a second drive motor 301, a plunger pump 302, and a superimposed proportional valve 303; the second drive motor 301 includes a second permanent magnet synchronization motor M2 and a second alternating current driver U2, and an input terminal of the second permanent magnet synchronization motor M2 is electrically connected to the second alternating current driver U2; a power terminal of the plunger pump 302 is connected to a torque output terminal of the second permanent magnet synchronization motor M2, and a high-pressure liquid discharge terminal of the plunger pump 302 is connected to a high-pressure liquid inlet of the superimposed proportional valve 303; a first liquid discharge port of the superimposed proportional valve 303 is connected to the steering mechanism 410, a second liquid discharge port of the superimposed proportional valve 303 is connected to the turntable mechanism 420, a third liquid discharge port of the superimposed proportional valve 303 is connected to the boom telescopic mechanism 430, and a fourth liquid discharge port of the superimposed proportional valve 303 is connected to the boom luffing mechanism 440; the second alternating current driver U2 is configured to acquire a steering control signal, a turntable control signal, a boom telescopic control signal, and a boom luffing control signal, and according to a luffing action signal, output an alternating current drive signal to the second permanent magnet synchronization motor M2; the second permanent magnet synchronization motor M2, according to the alternating current drive signal, drives the plunger pump 302 to output high-pressure hydraulic oil to each pump drive load mechanism 400 through the superimposed proportional valve 303.

Specifically, the steering mechanism 410, the turntable mechanism 420, the boom telescopic mechanism 430, and the boom luffing mechanism 440 in the arm-type aerial work platform may be driven by a pump. The pump drive system may include a second drive motor 301, a plunger pump 302, and a superimposed proportional valve 303. The second drive motor 301 and the plunger pump 302 may be tightly installed by through a spline and a flange face. The second drive motor 301 outputs torque to the plunger pump 302 to drive the plunger pump 302 to rotate so that the plunger pump 302 can deliver high-pressure hydraulic oil to the superimposed proportional valve 303 and the high-pressure hydraulic oil can be delivered to each pump drive load mechanism 400 through the superimposed proportional valve 303. In this manner, each pump drive load mechanism 400 performs corresponding actions. The second driver motor 301 is integrated with a second permanent magnet synchronization motor M2 and a second alternating current driver U2. The second alternating current driver U2 is connected to three-phase input terminals (including U phase, V phase, and W phase) of the second permanent magnet synchronization motor M2 through three copper bars, which can be disassembled and assembled to facilitate maintenance and care. The second alternating current driver U2 can acquire a load control signal (including a steering control signal, a turntable control signal, a boom telescopic control signal, and a boom luffing control signal) from the vehicle controller 502. After receiving the load control signal, the second alternating current driver U2 may output a corresponding alternating current drive signal to the second permanent magnet synchronization motor M2 according to the load control signal so that the second permanent magnet synchronization motor M2 can rotate under the drive of the alternating current drive signal to achieve torque output. The degree of conduction, closing, or opening of each liquid discharge port of the superimposed proportional valve 303 may be controlled by the vehicle controller 502 so that each pump drive load mechanism 400 can be accurately controlled.

Illustratively, a fault indicator light may be disposed on the second alternating current driver U2 to display the current state of the second alternating current driver U2. The working principle of the fault indicator light may be the same as that of the fault indicator light on the first alternating current driver U1, and details are not described herein again.

The second drive motor 301 may also be integrated with an AB-phase encoder and a temperature sensor. The temperature sensor is configured to detect the temperature of the second alternating current driver U2 and can feed back the detected temperature to the vehicle controller 502 to achieve the overheat protection function of the second alternating current driver U2. For example, it is possible to alarm when the temperature of the second alternating current driver U2 reaches 75 °C, and the output is cut off when the temperature of the second alternating current driver U2 reaches 95 °C. The AB-phase encoder may detect the rotation direction and the rotation speed of the second permanent magnet synchronization motor M2 in real time and can send the detected rotation direction and rotation speed to the vehicle controller through CANOPEN so that the vehicle controller adjusts the load control signal sent to the second alternating current driver U2 according to the rotation direction and the rotation speed of the second permanent magnet synchronization motor M2 in real time.

Illustratively, the pump drive system may also include a direct current high-voltage power supply line 306, and the power supply terminal of the second alternating current driver U2 may receive a high-voltage power signal through the direct current high-voltage power supply line.

In some embodiments, combined with reference to Fig. 3, the steering mechanism 410 includes a bidirectional left steering cylinder 411 and a bidirectional right steering cylinder 412; the bidirectional left steering cylinder 411 and the bidirectional right steering cylinder 412 are disposed on the front drive axle 101; the bidirectional left steering cylinder 411 and the bidirectional right steering cylinder 412 are configured to control the direction of the front drive wheels according to high-pressure hydraulic oil from the superimposed proportional valve 303.

Specifically, after receiving the steering action signal, the vehicle controller 502 sends a corresponding motor rotation speed control signal and a motor steering control signal to the second alternating current driver U2. The second alternating current driver U2 drives the second permanent magnet synchronization motor M2 to rotate in an expected rotation speed and rotation direction according to the rotation speed control signal and the motor steering control signal so that the second permanent magnet synchronization motor M2 can drive the plunger pump 302 to rotate, and the plunger pump 302 can deliver the high-pressure hydraulic oil to the high-pressure liquid inlet of the superimposed proportional valve 303 through a hydraulic oil pipe. Moreover, the vehicle controller 502 can adjust each liquid discharge port of the superimposed proportional valve 303 by a PWM proportional adjustment method so that the high-pressure hydraulic oil is delivered to the bidirectional left steering cylinder 411 or the bidirectional right steering cylinder 412 through the first liquid discharge port of the superimposed proportional valve 303, and the two front drive wheels 103 move to the left or the right.

In some embodiments, with reference to FIG. 1, 6 and 10 the turntable mechanism 420 includes a swing motor 421 and a reducer module 423 and a turntable body 422; the swing motor 421 and the reducer module 423 is configured to control the steering of the turntable body 422 according to high-pressure hydraulic oil from the superimposed proportional valve 303.

Specifically, after receiving the turntable rotation action signal, the vehicle controller 502 sends a corresponding motor rotation speed control signal and a motor steering control signal to the second alternating current driver U2. The second alternating current driver U2 drives the second permanent magnet synchronization motor M2 to rotate in an expected rotation speed and rotation direction according to the rotation speed control signal and the motor steering control signal so that the second permanent magnet synchronization motor M2 can drive the plunger pump 302 to rotate, and the plunger pump 302 can deliver the high-pressure hydraulic oil to the high-pressure liquid inlet of the superimposed proportional valve 303 through the hydraulic oil pipe. Moreover, the vehicle controller 502 can adjust each liquid discharge port of the superimposed proportional valve 303 by a PWM proportional adjustment method so that the high-pressure hydraulic oil is delivered to the swing motor 421 and the reducer module 423 through the second liquid discharge port of the superimposed proportional valve 303 to drive the turntable body 422 to turn.

In some embodiments, with reference to FIG. 1, FIG. 5, and FIG. 6 to FIG. 8, the boom telescopic mechanism 430 includes a four-section arm telescopic mechanism 431 and a telescopic mechanism oil cylinder 432; the telescopic mechanism oil cylinder 432 controls the four-section arm telescopic mechanism 431 to extend or retract according to the high-pressure hydraulic oil from the superimposed proportional valve 303.

Specifically, based on the same control principle as the preceding steering mechanism 410 and turntable mechanism 420 mentioned above, the vehicle controller 502 sends a corresponding motor rotation speed control signal and a motor steering control signal to the second alternating current driver U2 after receiving the boom telescopic action signal. The second alternating current driver U2 drives the second permanent magnet synchronization motor M2 to rotate in an expected rotation speed and rotation direction according to the rotation speed control signal and the motor steering control signal so that the second permanent magnet synchronization motor M2 can drive the plunger pump 302 to rotate, and the plunger pump 302 can deliver the high-pressure hydraulic oil to the high-pressure liquid inlet of the superimposed proportional valve 303 through the hydraulic oil pipe. Moreover, the vehicle controller 502 can adjust each liquid discharge port of the superimposed proportional valve 303 by a PWM proportional adjustment method so that the high-pressure hydraulic oil is delivered to the telescopic mechanism cylinder 432 through the third liquid discharge port of the superimposed proportional valve 303 to drive the four-section arm telescopic mechanism 431 to perform a corresponding extension or retraction action.

In some embodiments, with reference to FIG. 1, and FIGS. 6 to 8, the boom luffing mechanism 440 includes a luffing lifting cylinder 441; the luffing lifting cylinder 441 controls the upward or downward amplitude of variation of the four-section arm telescopic mechanism 431 according to the high-pressure hydraulic oil from the superimposed proportional valve 303.

Specifically, based on the same control principle as the preceding pump drive load mechanism 400, after receiving the boom luffing action signal, the vehicle controller 502 sends a corresponding motor rotation speed control signal and a motor steering control signal to the second alternating current driver U2, the second alternating current driver U2 drives the second permanent magnet synchronization motor M2 to rotate in an expected rotation speed and rotation direction according to the rotation speed control signal and the motor steering control signal so that the second permanent magnet synchronization motor M2 can drive the plunger pump 302 to rotate, and the plunger pump 302 can deliver the high-pressure hydraulic oil to the high-pressure liquid inlet of the superimposed proportional valve 303 through the hydraulic oil pipe. Moreover, the vehicle controller 502 can adjust each liquid discharge port of the superimposed proportional valve 303 by a PWM proportional adjustment method so that the high-pressure hydraulic oil is delivered to the luffing lifting cylinder 441 through the fourth liquid discharge port of the superimposed proportional valve 303, and the luffing lifting cylinder 441 extends outward or retracts inward to drive the four-section arm telescopic mechanism 431 to perform corresponding upward or downward amplitude of variation.

The arm-type aerial work platform provided by the embodiment of the present invention adopts a second drive motor integrated with a second permanent magnet synchronization motor and a second alternating current driver for a pump drive load mechanism to achieve the function of a pump drive system. Compared with the method of using a three-phase alternating current asynchronous motor to drive the pump drive load mechanism, the method in the present invention simplifies the control operation, improves the drive performance of the pump drive system, and effectively enhances the reliability of the arm-type aerial work platform.

In some embodiments, with reference to FIGS. 7 to 9, the arm-type aerial work platform also includes a down-control operating system 501 and a vehicle controller 502; the down-control operating system 501 is communicatively connected to the vehicle controller 502; the down-control operating system 501 is configured to send an action signal to the vehicle controller 502; the action signal includes a walking action signal, a steering action signal, a turntable rotation action signal, a boom telescopic action signal, and a boom luffing action signal. The vehicle controller 502 is communicatively connected to the first alternating current driver U1 and the second alternating current driver U2, and the vehicle controller 502 is configured to send a walking control signal to the first alternating current driver U1 according to the walking action signal, send a steering control signal to the second alternating current driver U2 according to the steering action signal, send a turntable control signal to the second alternating current driver U2 according to the turntable rotation action signal, send a boom telescopic control signal to the second alternating current driver U2 according to the boom telescopic action signal, and send a boom luffing control signal to the second alternating current driver U2 according to the boom luffing action signal; the vehicle controller 502 is also communicatively connected to the superimposed proportional valve 303 (not shown in the figures) and is configured to control the opening of the first liquid discharge port, the second liquid discharge port, the third liquid discharge port, and the fourth liquid discharge port of the superimposed proportional valve 303 according to the action signal provided by the down-control operating system 501.

Specifically, the control panel of the down-control operating system 501 is provided with various action switches of the vehicle. An operator may send a walking action signal, a steering action signal, a turntable rotation action signal, a boom telescopic action signal, and a boom luffing action signal to the vehicle controller 502 through the down-control operating system 501 so that the vehicle controller 502 sends corresponding control signals to the first alternating current driver U1, the second alternating current driver U2, and the superimposed proportional valve 303 according to the action signals. The vehicle controller 502 may be integrated into the down-control operating system 501.

In some embodiments, the down-control operating system 501 and the vehicle controller 502 are also electrically connected to the superimposed proportional valve 303; the down-control operating system 501 is also configured to acquire the opening information of the superimposed proportional valve 303 and send opening adjustment information to the vehicle controller 502 according to the opening information of the superimposed proportional valve 303; the vehicle controller 502 is also configured to, according to the opening adjustment information, adjust the opening of the first liquid discharge port, the second liquid discharge port, the third liquid discharge port , and the fourth liquid discharge port of the superimposed proportional valve 303. Thus, closed-loop precise control of the superimposed proportional valve 303 is achieved, and the control performance of the vehicle is improved.

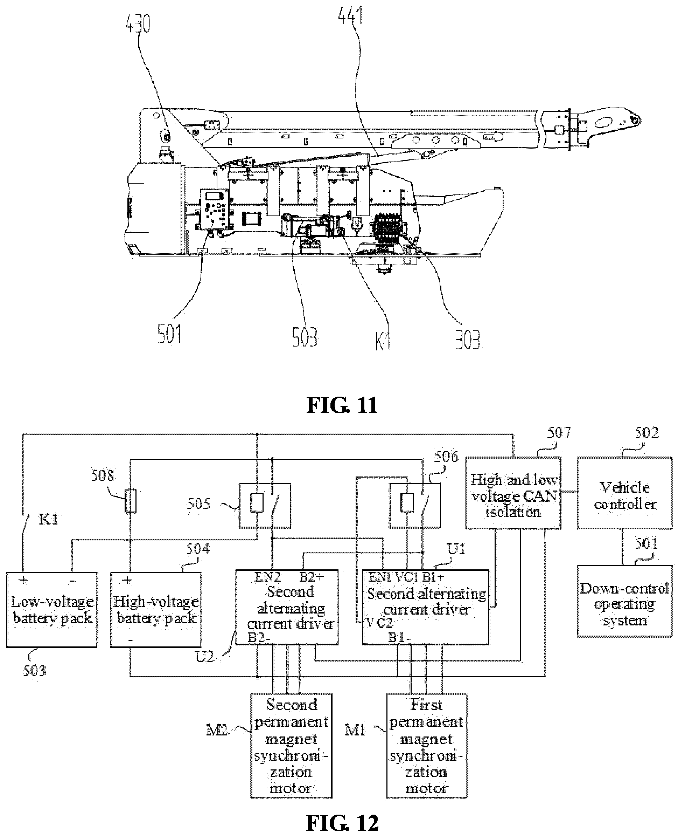

In some embodiments, with continued reference to Fig. 7 to Fig. 12, the arm-type aerial work platform also includes a low-voltage battery pack 503, a high-voltage battery pack 504, a high-voltage enabling relay 505, a main contactor 506, a high and low voltage CAN isolation 507, and a main power switch K1; the coil of the high-voltage enabling relay 505 is electrically connected between a positive terminal "+" and a negative terminal "-" of the low-voltage battery pack 503, the main power switch K1 is disposed between the coil of the high-voltage enabling relay 505 and the positive terminal "+" of the low-voltage battery pack 503, a first contact point of the high-voltage enabling relay 505 is electrically connected to a positive terminal "+" of the high-voltage battery pack 504, and a second contact point of the high-voltage enabling relay 505 is electrically connected to an enabling terminal EN1 of the first alternating current driver U1 and an enabling terminal EN2 of the second alternating current driver U2; the coil of the main contactor 506 is electrically connected to power supply control terminals VC1 and VC2 of the second alternating current driver U2, a first contact point of the main contactor 506 is electrically connected to the positive terminal of the high-voltage battery pack 504, and a second contact point of the main contactor 506 is electrically connected to a power supply terminal B1+ of the first alternating current driver U1 and a power supply terminal B2+ of the second alternating current driver U2; the high and low voltage CAN isolation 507 is communicatively connected to the vehicle controller 502, the low-voltage battery pack 503, the high-voltage battery pack 504, the first alternating current driver U1, and the second alternating current driver U2.

Specifically, the low-voltage battery pack 503 may be a 12V/24V lead-acid battery pack, and the high-voltage battery pack 504 may be a lithium battery pack. The lithium battery pack may be a module with different voltage levels and capacities composed of batteries of different brands and specifications being connected in series/parallel. As required, modules with different voltage levels and capacities may be connected in series/parallel to form battery packs with different voltage level platforms and capacities. The lithium battery pack described in the present invention may refer to a 48 V or 80 V lithium battery voltage platform, a 144 V to 358 V lithium battery platform, or a 450 V to 640 V or even higher lithium battery voltage platform. The main power switch K1 may be disposed at the "+" position of the positive terminal of the low-voltage battery pack 503. When the main power switch K1 is closed, the low voltage of the low-voltage battery pack 503 passes through the coil of the high-voltage enabling relay 505, causing the pull-in of the first contact point and the second contact point of the high-voltage enabling relay 505. Moreover, the high-voltage power of the high-voltage battery pack 504 may be transmitted to the enabling terminal EN1 of the first alternating current driver U1 and the enabling terminal EN2 of the second alternating current driver U2 through the pull-in contact points of the high-voltage enabling relay 505 so that the first alternating current driver U1 and the second alternating current driver U2 are in a wake-up state. After being awakened, the second alternating current driver U2 outputs a high voltage to one terminal of the coil of the main contactor 506 through the power supply control terminal VC1 and outputs a low voltage to the other terminal of the coil of the main contactor 506 through the power supply control terminal VC2 so that the coil of the main contactor 506 is energized. In this manner, the first contact point and the second contact point of the main contactor 506 are pull-in, and the high-voltage power of the high-voltage battery pack 504 can be transmitted to the power supply terminal B1+ of the first alternating current driver U1 and the power supply terminal B2+ of the second alternating current driver U2 through the pull-in contact points of the main contactor 506. Moreover, the power supply terminal B1- of the first alternating current driver U1 and the power supply terminal B2- of the second alternating current driver U2 are both electrically connected to the negative terminal of the high-voltage battery pack 504 to realize the power supply to the first alternating current driver U1 and the second alternating current driver U2 and enable the first alternating current driver U1 and the second alternating current driver U2 to operate normally. The high-voltage battery pack 504 is assembled on a turntable frame. After being connected to the main power fuse 508 and the main contactor 506 through the direct current high-voltage power supply line 306, the positive terminal of the high-voltage battery pack 504 is assembled on a first insulating seat A1. After being connected through the direct current high-voltage power supply line 306, the negative terminal of the high-voltage battery pack 504 is assembled on a second insulating seat A2. The contact points of the high-voltage enabling relay and a main relay are preferably normally open contact points.

The vehicle controller 502 may communicate with and connect to the low-voltage battery pack 503, the high-voltage battery pack 504, the first alternating current driver U1, and the second alternating current driver U2 by using the CAN bus through the high and low voltage CAN isolation 507. The vehicle controller 502 may communicate with the low-voltage battery pack 503 through a low-voltage CAN network to acquire the power information of the low-voltage battery pack 503. The vehicle controller 502 communicates with the high-voltage battery pack 504 through a high-voltage CAN network to acquire the power information of the high-voltage battery pack 504. The vehicle controller 502 also communicates with the first alternating current driver U1 and the second alternating current driver U2 through a high-voltage CAN network to achieve data exchange.

The high and low voltage CAN isolation 507 may be used as a communication medium between the vehicle controller 502 and the low-voltage battery pack 503, the high-voltage battery pack 504, the first alternating current driver U1, and the second alternating current driver U2. Through the electrical isolation and signal conditioning functions, the high and low voltage CAN isolation 507 can quickly implement electrical isolation and connection between the two CAN networks to reduce the CAN communication error rate between the weak current terminal and the strong current terminal, protect the CAN interface of the weak current terminal, and avoid permanent damage to the CAN interface. Moreover, the high and low voltage CAN isolation 507 has excellent electrical isolation performance and can reduce error frames, which greatly optimizes the transmission data on the CAN bus.

## Claims

1. An arm-type aerial work platform, comprising a chassis mechanism (100) and a walking drive mechanism (200), wherein
the chassis mechanism (100) comprises a front drive axle (101), a front drive axle (102), front drive wheels (103) on two sides of the front drive axle (101), and rear drive wheels (104) on two sides of the front drive axle (102);
the walking drive mechanism (200) comprises a front transmission shaft (201), a rear transmission shaft (202), a transfer case (203), and a first drive motor (204);
the front drive axle (101) is connected to a first output terminal of the transfer case (203) through the front transmission shaft (201); and the front drive axle (102) is connected to a second output terminal of the transfer case (203) through the rear transmission shaft (202);
the first drive motor (204) comprises a first permanent magnet synchronization motor and a first alternating current driver U1; an input terminal of the first permanent magnet synchronization motor is electrically connected to the first alternating current driver, and an output terminal of the first permanent magnet synchronization motor is connected to an input terminal of the transfer case (203); and
the first alternating current driver is configured to acquire a walking control signal and according to the walking control signal, output a walking drive signal to the first permanent magnet synchronization motor.

2. The arm-type aerial work platform of claim 1, wherein the walking drive mechanism (200) further comprises a high-voltage power line (205) ; and
a power supply terminal of the first alternating current driver is configured to receive a high-voltage power signal through the high-voltage power line (205) .

3. The arm-type aerial work platform of claim 1, further comprising a pump drive system and a plurality of pump drive load mechanisms (400), wherein
each pump drive load mechanism (400) of the plurality of pump drive load mechanisms (400) at least comprises a steering mechanism (410), a turntable mechanism (420), a boom telescopic mechanism (430), and a boom luffing mechanism (440);
the pump drive system comprises a second drive motor (301), a plunger pump (302), and a superimposed proportional valve (303);
the second drive motor (301) comprises a second permanent magnet synchronization motor and a second alternating current driver, and an input terminal of the second permanent magnet synchronization motor is electrically connected to the second alternating current driver;
a power terminal of the plunger pump (302) is connected to a torque output terminal of the second permanent magnet synchronization motor, and a high-pressure liquid discharge terminal of the plunger pump (302) is connected to a high-pressure liquid inlet of the superimposed proportional valve (303);
a first liquid discharge port of the superimposed proportional valve (303) is connected to the steering mechanism (410), a second liquid discharge port of the superimposed proportional valve (303) is connected to the turntable mechanism (420) , a third liquid discharge port of the superimposed proportional valve (303) is connected to the boom telescopic mechanism (430) , and a fourth liquid discharge port of the superimposed proportional valve (303) is connected to the boom luffing mechanism (440) ;
the second alternating current driver is configured to acquire a steering control signal, a turntable control signal, a boom telescopic control signal, and a boom luffing control signal, and according to a luffing action signal, output an alternating current drive signal to the second permanent magnet synchronization motor; and
the second permanent magnet synchronization motor is configured to, according to the alternating current drive signal, drive the plunger pump (302) to output high-pressure hydraulic oil to the each pump drive load mechanism (400) of the plurality of pump drive load mechanisms (400) through the superimposed proportional valve (303).

4. The arm-type aerial work platform of claim 3, wherein the steering mechanism (410) comprises a bidirectional left steering cylinder (411) and a bidirectional right steering cylinder (412);
the bidirectional left steering cylinder (411) and the bidirectional right steering cylinder (412) are disposed on the front drive axle (101); and
the bidirectional left steering cylinder (411) and the bidirectional right steering cylinder (412) are configured to control a direction of the front drive wheels (103) according to high-pressure hydraulic oil from the superimposed proportional valve (303).

5. The arm-type aerial work platform of claim 3, wherein the turntable mechanism (420) comprises a swing motor and reducer module and a turntable body (422), and the swing motor and the reducer module are configured to control steering of the turntable body (422) according to high-pressure hydraulic oil from the superimposed proportional valve (303).

6. The arm-type aerial work platform of claim 4, wherein the boom telescopic mechanism (430) comprises a four-section arm telescopic mechanism (431) and a telescopic mechanism oil cylinder (432), and the telescopic mechanism oil cylinder (432) is configured to control the four-section arm telescopic mechanism (431) to extend or retract according to the high-pressure hydraulic oil from the superimposed proportional valve (303).

7. The arm-type aerial work platform of claim 6, wherein the boom luffing mechanism (440) comprises a luffing lifting cylinder (441), and the luffing lifting cylinder (441) is configured to control upward or downward amplitude of variation of the four-section arm telescopic mechanism (431) according to the high-pressure hydraulic oil from the superimposed proportional valve (303).

8. The arm-type aerial work platform of claim 3, further comprising a down-control operating system (501) and a vehicle controller (502), wherein
the down-control operating system (501) is communicatively connected to the vehicle controller (502);
the down-control operating system (501) is configured to send an action signal to the vehicle controller (502); and the action signal comprises a walking action signal, a steering action signal, a turntable rotation action signal, a boom telescopic action signal, and a boom luffing action signal;
the vehicle controller (502) is communicatively connected to the first alternating current driver and the second alternating current driver, and the vehicle controller (502) is configured to send a walking control signal to the first alternating current driver according to the walking action signal, send a steering control signal to the second alternating current driver according to the steering action signal, send a turntable control signal to the second alternating current driver according to the turntable rotation action signal, send a boom telescopic control signal to the second alternating current driver according to the boom telescopic action signal, and send a boom luffing control signal to the second alternating current driver according to the boom luffing action signal;
the vehicle controller (502) is further communicatively connected to the superimposed proportional valve (303) and is configured to, according to the action signal provided by the down-control operating system (501), control opening of the first liquid discharge port, the second liquid discharge port, the third liquid discharge port, and the fourth liquid discharge port of the superimposed proportional valve (303).

9. The arm-type aerial work platform of claim 8, wherein the down-control operating system (501) and the vehicle controller (502) are further electrically connected to the superimposed proportional valve (303);
the down-control operating system (501) is further configured to acquire opening information of the superimposed proportional valve (303) and send opening adjustment information to the vehicle controller (502) according to the opening information of the superimposed proportional valve (303); and
the vehicle controller (502) is further configured to, according to the opening adjustment information, adjust the opening of the first liquid discharge port, the second liquid discharge port, the third liquid discharge port, and the fourth liquid discharge port of the superimposed proportional valve (303).

10. The arm-type aerial work platform of claim 3, further comprising: a low-voltage battery pack (503), a high-voltage battery pack (504), a high-voltage enabling relay (505), a main contactor (506), a high and low voltage CAN isolation (507), and a main power switch, wherein
a coil of the high-voltage enabling relay (505) is electrically connected between a positive terminal and a negative terminal of the low-voltage battery pack (503), the main power switch is disposed between the coil of the high-voltage enabling relay (505) and the positive terminal of the low-voltage battery pack (503), a first contact point of the high-voltage enabling relay (505) is electrically connected to a positive terminal of the high-voltage battery pack (504), and a second contact point of the high-voltage enabling relay (505) is electrically connected to an enabling terminal of the first alternating current driver and an enabling terminal of the second alternating current driver;
a coil of the main contactor (506) is electrically connected to a power supply control terminal of the second alternating current driver, a first contact point of the main contactor (506) is electrically connected to the positive terminal of the high-voltage battery pack (504), and a second contact point of the main contactor (506) is electrically connected to a power supply terminal of the first alternating current driver and a power supply terminal of the second alternating current driver; and
the high and low voltage CAN isolation (507) is communicatively connected to the vehicle controller (502), the low-voltage battery pack (503), the high-voltage battery pack (504), the first alternating current driver, and the second alternating current driver.
